# EUROPÄISCHE PATENTANMELDUNG

(11) **EP 2 479 503 A1**
(43) Veröffentlichungstag der Anmeldung: **25.07.2012**
(21) Anmeldenummer: 11151335.4
(22) Anmeldetag: 19.01.2011
(51) Int. Cl.: F24D 11/02, F24J 3/08

(54) **Vorrichtung zur Erwärmung von Wasser, insbesondere zur Warmwasserbereitung in einem Gebäude**

(71) Anmelder: Roth Werke GmbH, 35232 Dautphetal (DE)
(72) Erfinder:
(74) Vertreter: Rohmann, Michael

(57) **Zusammenfassung**

Vorrichtung zur Erwärmung von Wasser, insbesondere zur Warmwasserbereitung in einem Gebäude, wobei die Vorrichtung zumindest eine Erdwärmenutzungseinheit und eine Wärmepumpe aufweist. Der Wärmepumpe ist quellenseitig ein erwärmtes Wärmeträgermedium in einem Wärmeträgermediumkreislauf von der Erdwärmenutzungseinheit zuführbar, wobei das Wärmeträgermedium nach Durchlauf durch die Wärmepumpe zu der Erdwärmenutzungseinheit als abgekühltes bzw. kaltes Wärmeträgermedium zurückführbar ist. An die Erdwärmenutzungseinheit ist ein zusätzlicher Wärmetauscher zur Erwärmung des Wärmeträgermediums angeschlossen, wobei durch den zusätzlichen Wärmetauscher erwärmtes Wärmeträgermedium der Erdwärmenutzungseinheit und/oder der Wärmepumpe zuführbar ist. Die Erdwärmenutzungseinheit weist zumindest eine Registereinheit auf, wobei die Registereinheit in einer bzw. im Wesentlichen in einer Ebene angeordnet ist. Die Registereinheit weist zwei benachbart zueinander angeordnete und voneinander getrennte Erdwärmekreisläufe auf, wobei die Erdwärmekreisläufe vorzugsweise als parallel bzw. im Wesentlichen als parallel verlaufende Rohrkreisläufe ausgebildet sind.

## Beschreibung

Die Erfindung betrifft eine Vorrichtung zur Erwärmung von Wasser, insbesondere zur Warmwasserbereitung in einem Gebäude, wobei die Vorrichtung zumindest eine Erdwärmenutzungseinheit und eine Wärmepumpe aufweist.

Vorrichtungen der eingangs genannten Art sind aus der Praxis grundsätzlich bekannt. Diese Vorrichtungen weisen häufig einen geringen Wirkungsgrad auf und sind daher insbesondere in umwelttechnischer Hinsicht verbesserungsbedürftig. Weiterhin ist der bei den aus der Praxis bekannten Vorrichtungen erforderliche Eingriff in den Boden eines Grundstückes problematisch, da zur ausreichenden Nutzung der Erdwärmenutzungseinheit große Flächen zur Verfügung stehen müssen.

Daher liegt der Erfindung das technische Problem zugrunde, eine Vorrichtung der eingangs genannten Art anzugeben, die sich durch einen geringen Flächenverbrauch bzw. Flächenbedarf auszeichnet, die mit geringen Investitionskosten realisierbar ist und die sich durch einen optimalen Wirkungsgrad auszeichnet.

Zur Lösung des technischen Problems lehrt die Erfindung eine Vorrichtung zur Erwärmung von Wasser, insbesondere zur Warmwasserbereitung in einem Gebäude, wobei die Vorrichtung zumindest eine Erdwärmenutzungseinheit und eine Wärmepumpe aufweist, wobei der Wärmpumpe quellenseitig ein erwärmtes Wärmeträgermedium in einem Wärmeträgermediumkreislauf von der Erdwärmenutzungseinheit zuführbar ist und nach dem Durchlauf durch die Wärmepumpe zu der Erdwärmenutzungseinheit als abgekühltes bzw. kaltes

Wärmeträgermedium zurückführbar ist, wobei an die Erdwärmenutzungseinheit ein zusätzlicher Wärmetauscher zur Erwärmung des Wärmeträgermediums angeschlossen ist, wobei durch den zusätzlichen Wärmetauscher erwärmtes Wärmeträgermedium der Erdwärmenutzungseinheit und/oder der Wärmepumpe zuführbar ist, wobei die Erdwärmenutzungseinheit zumindest eine Registereinheit aufweist, wobei die Registereinheit in einer Ebene bzw. im Wesentlichen in einer Ebene angeordnet ist, wobei die Registereinheit zwei benachbart zueinander angeordnete und voneinander getrennte Erdwärmekreisläufe aufweist und wobei die Erdwärmekreisläufe vorzugsweise als parallel bzw. im Wesentlichen als parallel verlaufende Rohrkreisläufe ausgebildet sind.

Es liegt im Rahmen der Erfindung, dass die Registereinheit in einer vertikalen bzw. ungefähr in einer vertikalen Ebene angeordnet ist. Es ist möglich, dass die Registereinheit in einer horizontalen bzw. ungefähr horizontalen Ebene orientiert ist. Gemäß einer Ausführungsform der erfindungsgemäßen Vorrichtung sind die Rohrkreisläufe einer Registereinheit versetzt und vorteilhafterweise hintereinander angeordnet. In einer bevorzugten Ausführungsform der erfindungsgemäßen Vorrichtung sind die Erdwärmekreisläufe mit der Maßgabe in der Registereinheit angeordnet, dass das Wärmeträgermedium die Erdwärmekreisläufe in gegensinnigen Richtungen durchströmt. Zweckmäßigerweise durchströmt das Wärmeträgermedium die Erdwärmekreisläufe in gegensinnigen Richtungen, wenn das Wärmeträgermedium vorzugsweise ausschließlich durch die Erdwärmenutzungseinheit erwärmt wird. Empfohlenermaßen durchströmt das Wärmeträgermedium die Erdwärmekreisläufe in gegensinnigen Richtungen, wenn das Wärmeträgermedium mit der Erdwärmenutzungseinheit und mit einem Solarkollektor erwärmt wird. Es ist möglich, dass das Wärmeträgermedium die Erdwärmekreisläufe gleichsinnig durchströmt. In einer bevorzugten Ausführungsform der erfindungsgemäßen Vorrichtung ist zunächst Wärme in dem zusätzlichen Wärmetauscher auf das Wärmeträgermedium übertragbar. Zweckmäßigerweise ist die Erdwärmenutzungseinheit rücklaufseitig mit dem zusätzlichen Wärmetauscher verbunden, so dass das Wärmeträgermedium zunächst den zusätzlichen Wärmetauscher und dann die Erdwärmenutzungseinheit durchströmt. Nach dem Durchströmen der Erdwärmenutzungseinheit wird das Wärmeträgermedium vorteilhafterweise der Wärmepumpe zugeführt. Es empfiehlt sich, den Rücklauf des zusätzlichen Wärmetauschers durch die Erdwärmenutzungseinheit zu leiten, wenn die Temperatur des Erdreichs höher ist als die Lufttemperatur. Gemäß einer vorteilhaften Ausführungsform ist die in dem Wärmeträgermedium gespeicherte Wärme mit der Wärmepumpe auf das Wasser übertragbar und/oder in einem Anschlussspeicher speicherbar.

Wasser meint im Rahmen der Erfindung Trinkwasser, Brauchwasser und/oder Heizungswasser. Grundsätzlich ist es möglich, dass das Trinkwasser, Brauchwasser und/oder Heizungswasser unabhängig oder in Kombination miteinander erwärmbar sind.

Dass die Erdwärmenutzungseinheit in einer frostfreien Tiefe im Erdreich angeordnet ist, meint im Rahmen der Erfindung, dass die Erdwärmenutzungseinheit in einer Tiefe im Erdreich abgeordnet ist, deren Temperatur stets größer ist als 0° C. Grundsätzlich ist es möglich, dass durch das in der Erdwärmenutzungseinheit zirkulierende Wärmeträgermedium dem Erdreich Wärme derart entzogen wird, dass die Temperatur des Erdreiches kleiner als 0° C ist. Die Angabe der frostfreien Tiefe bezieht sich zweckmäßigerweise auf ein ungestörtes Erdreich bzw. auf Erdreich, dem keine Wärme durch die Erdwärmenutzungseinheit entzogen wird. Soweit vorstehend und nachfolgend von der Anordnung der Erdwärmenutzungseinheit in einer Tiefe die Rede ist, meint Tiefe den Abstand der Oberseite bzw. Oberkante der Erdwärmenutzungseinheit, vorzugsweise den Abstand der Oberseite bzw. Oberkante der nachfolgend noch beschriebenen Registereinheit von der Erdoberfläche. Zweckmäßigerweise weist die Erdwärmenutzungseinheit zwei und vorzugsweise eine Mehrzahl bzw. Vielzahl von Registereinheiten auf. Gemäß einer Ausführungsform sind die Erdwärmekreisläufe in einer Registereinheit von jeweils zumindest einem Rohr gebildet. Zweckmäßigerweise weist eine Registereinheit lediglich zwei Erdwärmekreisläufe auf. Es ist möglich, dass eine Registereinheit mehr als zwei, vorzugsweise drei und bevorzugt vier Erdwärmekreisläufe beinhaltet. Gemäß einer vorteilhaften Ausführungsform weisen die Rohre der zumindest zwei in einer Registereinheit angeordneten Erdwärmekreisläufe konstante bzw. ungefähr konstante Abstände auf.

Gemäß einer Ausführungsform ist das in dem Wärmeträgermediumkreislauf geführte Wärmeträgermedium Wasser oder Sole (Gemisch Wasser/Frostschutzmittel). Vorteilhafterweise wird das erwärmte Wärmeträgermedium einer Wasser/Sole-Wärmepumpe zugeführt, wobei die Wärme des Wärmeträgermediums erfindungsgemäß auf das Wasser unter Abkühlen des Wärmeträgermediums übertragen wird. Gemäß einer Ausführungsform der erfindungsgemäßen Vorrichtung ist das von der Wärmepumpe erwärmte Wasser in einem vorzugsweise zumindest zwei Warmwasserspeicher aufweisenden Speichermodul speicherbar. Es ist möglich, dass die Warmwasserspeicher keine eigenen Wärmetauscher aufweisen bzw. wärmetauscherfrei ausgebildet sind. Vorteilhafterweise ist in den Warmwasserspeichern unabhängig voneinander und vorzugsweise bei verschiedenen Temperaturen das von der Wärmepumpe erwärmte Wasser speicherbar. Es ist möglich, dass den Warmwasserspeichern in Abhängigkeit der mit der Wärmepumpe einstellbaren Temperatur des Wassers unabhängig voneinander erwärmtes Wasser zugeführt wird. Grundsätzlich ist es möglich, dass in den Warmwasserspeichern Unterstützungswärmetauscher angeordnet sind, mit denen die Temperatur des in den Warmwasserspeichern vorrätig gehaltenen, erwärmten Wassers konstant gehalten wird. Es ist möglich, dass den Unterstützungswärmetauschern Wärme von einem Solarkollektor zuführbar ist. Weiterhin ist es möglich, dass das erwärmte Wärmeträgermedium durch einen Wärmetauscher geführt wird, mit welchem Wärmetauscher die in dem erwärmten Wärmeträgermedium gespeicherte Wärme auf ein dem Anschlussspeicher zuführbares Speichermedium übertragen wird.

Gemäß einer weiteren Ausführungsform der erfindungsgemäßen Vorrichtung ist es möglich, dass eine Photovoltaikeinrichtung vorgesehen ist, mit der beispielsweise die Wärmepumpe mit elektrischer Energie versorgbar ist. Zweckmäßigerweise wird die mit der Photovoltaikeinrichtung erzeugte elektrische Energie zunächst in ein öffentliches Stromnetz eingespeist, wobei die Versorgung der Wärmepumpe mit elektrischer Energie dann durch das öffentliche Stromnetz erfolgt. Vorteilhafterweise wird die Wärmepumpe also indirekt durch die Photovoltaikeinrichtung mit elektrischer Energie versorgt.

Gemäß einer bevorzugten Ausführungsform ist die Erdwärmenutzungseinheit in dem Wärmeträgermediumkreislauf integriert und mit der Wärmepumpe in Reihe geschaltet. Dass die Erdwärmenutzungseinheit und die Wärmepumpe in Reihe geschaltet sind, meint im Rahmen der Erfindung, dass das Wärmeträgermedium die Erdwärmenutzungseinheit und die Wärmepumpe nacheinander in einem Kreislaufsystem durchströmt. Grundsätzlich ist es möglich, dass die Wärmepumpe und die Erdwärmenutzungseinheit mit einem Wärmetauscher miteinander gekoppelt sind. Weiterhin ist es möglich, dass die Vorrichtung zumindest zwei und möglicherweise eine Mehrzahl von Erdwärmenutzungseinheiten aufweist, die jeweils in den Wärmeträgermediumkreislauf integriert sind.

Zweckmäßigerweise weist die Erdwärmenutzungseinheit zumindest eine weitere Registereinheit auf, welche Registereinheit vorzugsweise in einer horizontalen bzw. im Wesentlichen horizontalen Ebene angeordnet ist, wobei die weitere Registereinheit zwei benachbart zueinander angeordnete und voneinander getrennte Erdwärmekreisläufe aufweist. In einer vorteilhaften Ausführungsform ist die weitere Registereinheit in einer vertikalen bzw. im Wesentlichen vertikalen Ebene angeordnet. Es ist möglich, dass die Registereinheit und die weitere Registereinheit jeweils in einer vertikalen bzw. im Wesentlichen vertikalen Ebene orientiert sind. Gemäß einer Ausführungsform weist die Erdwärmenutzungseinheit zwei und gemäß einer weiteren Ausführungsform eine Mehrzahl bzw. Vielzahl weiterer Registereinheiten auf, die in einer horizontalen bzw. im Wesentlichen horizontalen Ebene orientiert sind. Es ist möglich, dass in der weiteren Registereinheit mehr als zwei benachbart zueinander angeordnete und voneinander getrennte Erdwärmekreisläufe angeordnet sind. Vorzugsweise werden die in der weiteren Registereinheit angeordneten Erdwärmekreisläufe in entgegengesetzten bzw. gegensinnigen Richtungen von dem Wärmeträgermedium durchströmt.

Gemäß einer bevorzugten Ausführungsform sind die Erdwärmekreisläufe als parallele bzw. im Wesentlichen parallel verlaufende Rohrkreisläufe ausgebildet. Mit anderen Worten sind die Abstände der von den Rohren gebildeten Erdwärmekreisläufe bzw. Rohrkreisläufen konstant bzw. im Wesentlichen konstant. Grundsätzlich ist es möglich, dass die Rohrkreisläufe lediglich abschnittsweise bzw. bereichsweise parallel bzw. im Wesentlichen parallel verlaufen.

Gemäß einer vorteilhaften Ausführungsform sind die Erdwärmekreisläufe in einer Registereinheit als wendelförmige und/oder spiralförmige Rohrgebinde ausgebildet. Die zwei benachbart zueinander in einer Registereinheit angeordneten und voneinander getrennten Erdwärmekreisläufe bilden gemäß dieser vorteilhaften Ausführungsform zumindest bereichsweise und vorteilhafterweise vollständig bzw. im Wesentlichen vollständig eine Doppelhelix bzw. eine Doppelwendel aus. Grundsätzlich sind auch andere Ausgestaltungen der Erdwärmekreisläufe möglich, wobei zweckmäßigerweise die Erdwärmekreisläufe parallel zueinander orientiert sind.

Es empfiehlt sich, dass die Erdwärmenutzungseinheit in einer Tiefe von bis zu 5 m im Erdreich angeordnet ist. Empfohlenermaßen ist die Erdwärmenutzungseinheit in einer Tiefe von mindestens 0,5 m, vorzugsweise 0,6 m und besonders bevorzugt 0,8 m im Erdreich angeordnet. Es hat sich bewährt, dass die Erdwärmenutzungseinheit in einer Tiefe von bis zu 4 m, vorteilhafterweise bis zu 3 m und besonders bevorzugt bis zu 2,5 m im Erdreich angeordnet ist.

Gemäß einer bevorzugten Ausführungsform weist die Vorrichtung einen zusätzlichen Wärmetauscher zum Erwärmen des Wärmeträgermediums auf, wobei durch den zusätzlichen Wärmetauscher erwärmtes Wärmeträgermedium der Erdwärmenutzungseinheit und/oder der Wärmepumpe zuführbar ist. Zweckmäßigerweise ist der zusätzliche Wärmetauscher als Luft/Sole-Wärmetauscher ausgebildet. Dem Luft/Sole-Wärmetauscher ist vorzugsweise Umgebungsluft zuführbar, wobei die Wärme der Umgebungsluft auf die Sole bzw. das Wärmeträgermedium des Wärmeträgermediumkreislaufs übertragbar ist. Vorzugsweise ist das Wärmeträgermedium von dem zusätzlichen Wärmetauscher unmittelbar bzw. direkt zu der Wärmepumpe förderbar, wenn eine Temperatur des den zusätzlichen Wärmetauscher verlassenden Wärmeträgermediums höher ist als die Temperatur des Erdreichs. Es liegt im Rahmen der Erfindung, dass die Erdwärmenutzungseinheit mit einer Überbrückungsleitung ausgestattet ist, durch welche Überbrückungsleitung das von dem zusätzlichen Wärmetauscher erwärmte Wärmeträgermedium zu der Wärmepumpe führbar ist, wobei ein thermischer Kontakt des Wärmeträgermediums mit dem Erdreich ausgeschlossen ist. Bei der Überbrückungsleitung handelt es sich zweckmäßigerweise um eine mit einem Isoliermantel ausgestattete Fluidleitung. Gemäß einer Ausführungsform ist das Wärmeträgermedium mit dem zusätzlichen Wärmetauscher und anschließend vorzugsweise durch die Erdwärmenutzungseinheit erwärmbar, wenn die Temperatur des mit dem zusätzlichen Wärmetauscher erwärmten Wärmeträgermediums niedriger als die Temperatur des Erdreichs ist.

Vorteilhafterweise weist die Vorrichtung zumindest einen Solarkollektor auf, wobei mit dem Solarkollektor gewonnene Wärme auf das Wärmeträgermedium übertragbar und/oder in einem Anschlussspeicher speicherbar ist. Zweckmäßigerweise erwärmt der Solarkollektor ein Wärmeübertragungsmedium in einem Solarkollektorkreislauf, von welchem Wärmeübertragungsmedium die Wärme mit einem Wärmetauscher auf das Wärmeträgermedium übertragbar ist. Grundsätzlich ist es möglich, dass die Wärme des Wärmeübertragungsmediums direkt bzw. unmittelbar auf das Wasser und/oder das Wärmeträgermedium und/oder das Speichermedium in dem Anschlussspeicher übertragbar ist. Es ist möglich, dass der Solarkollektorkreislauf mit dem Wärmeträgerkreislauf vorzugsweise direkt verbindbar ist. Gemäß einer vorteilhaften Ausführungsform der Erfindung ist das Wärmeübertragungsmedium mit dem Wärmeträgermedium identisch, so dass empfohlenermaßen das Wärmeträgermedium in dem Solarkollektor erwärmbar ist. Es ist möglich, dass das durch den Solarkollektor erwärmte Wärmeträgermedium der Erdwärmenutzungseinheit zuführbar ist, um die Temperatur des Erdreichs anzuheben bzw. das Erdreich thermisch zu regenerieren. Es empfiehlt sich, dass die in dem Wärmeträgermedium gespeicherte Wärme vorzugsweise zumindest teilweise in dem Anschlussspeicher speicherbar ist, wenn durch den Solarkollektor Wärme auf das Wärmeträgermedium übertragen ist. Mit anderen Worten ist Wärme von dem Wärmeträgermedium lediglich dann auf das Speichermedium in dem Anschlussspeicher übertragbar, wenn in dem durch den Solarkollektor erwärmten Wärmeträgermedium mehr Wärme gespeichert ist als durch den zusätzlichen Wärmetauscher und/oder die Erdwärmenutzungseinheit auf das Wärmeträgermedium übertragbar ist.

Es liegt im Rahmen der Erfindung, dass die in dem Anschlussspeicher gespeicherte Wärme und/oder die mit dem Solarkollektor gewonnene Wärme auf das Wärmeträgermedium übertragbar ist und wobei das erwärmte Wärmeträgermedium dem zusätzlichen Wärmetauscher zuführbar ist. Es ist möglich, dass im Betrieb des zusätzlichen Wärmetauschers eine Abkühlung des Wärmetauschers mit der Folge herbeigeführt wird, dass eine eine Wärmeübertragung einschränkende bzw. verhindernde Eisschicht auf einer Wärmeaustauschfläche ausgebildet wird. Zweckmäßigerweise ist erwärmtes Wärmeträgermedium, das vorzugsweise eine Temperatur von mehr als 0 °C aufweist, zu dem zusätzlichen Wärmetauscher rückführbar. Die Rückführung von erwärmtem Wärmeträgermedium zu dem zusätzlichen Wärmetauscher erfolgt mit der Maßgabe, dass eine Rückführung bis zum vollständigen bzw. im Wesentlichen vollständigen Abtauen des Eises durchführbar ist. Der Anschlussspeicher ist ein Wärmereservoir, mit dem zur Aufrechterhaltung eines hohen Wirkungsgrades des zusätzlichen Wärmetauschers eine eine Wärmeübertragung behindernde Eisschicht in dem zusätzlichen Wärmetauscher entfernbar ist.

Vorteilhafterweise weist die Vorrichtung eine Bypassleitung auf, mittels der das erwärmte Wärmeträgermedium dem zusätzlichen Wärmetauscher zuleitbar ist. Zweckmäßigerweise ist die Bypassleitung in der Erdwärmenutzungseinheit angeordnet. Es hat sich bewährt, dass die Bypassleitung eine Isolierung aufweist und vorzugsweise zumindest teilweise und bevorzugt zumindest größtenteils in einer frostfreien Tiefe im Erdreich zu dem zusätzlichen Wärmetauscher geführt ist. Grundsätzlich ist es möglich, dass die Bypassleitung außerhalb des Erdreichs von dem Anschlussspeicher zu dem zusätzlichen Wärmetauscher geführt ist.

Der Erfindung liegt die Erkenntnis zugrunde, dass mit der erfindungsgemäßen Vorrichtung Wasser mit einem optimalen Wirkungsgrad und einem optimalen Energieeinsatz erwärmbar ist. Hierbei kommt der Kombination aus der erfindungsgemäßen Erdwärmenutzungseinheit und der Wärmepumpe eine besondere Bedeutung zu. Durch das gegensinnige Durchströmen der Erdwärmekreisläufe in einer Registereinheit wird ein optimaler Energieaustrag aus dem Erdreich verwirklicht. Weiterhin wird gewährleistet, dass der Energieaustrag über den vollständigen, von den Erdwärmekreisläufen durchströmten Bereich des Erdreichs erfolgt. Die Tiefe, in der die erfindungsgemäße Erdwärmenutzungseinheit in dem Erdreich angeordnet ist, gestattet zudem einen Temperaturausgleich bzw. ein Aufwärmen des Erdreiches beispielsweise durch Sonneneinstrahlung in Phasen, in denen keine Wärme dem Erdreich entnommen wird. Die vorteilhafterweise in einer vertikalen Ebene orientierten und angeordneten Registereinheiten lassen sich zudem mit einem geringen Aufwand installieren und zeichnen sich zusätzlich durch einen geringen Flächenbedarf und Flächenverbrauch aus.

Weiterhin liegt der Erfindung die Erkenntnis zugrunde, dass durch die Kombination der Erdwärmenutzungseinheit mit dem zusätzlichen Wärmetauscher der Wirkungsgrad der erfindungsgemäßen Vorrichtung insbesondere in der Heizperiode eine signifikante Verbesserung erfährt. Durch die Einbindung eines Solarkollektors in das erfindungsgemäße System ist eine weitere Steigerung des Wirkungsgrades möglich. Durch die Bypassleitung von dem Solarkollektor bzw. dem Anschlussbehälter zu dem Luft/Sole-Wärmetauscher kann ein Eisbefall des Luft/Sole-Wärmetauschers problemlos entfernt werden, wodurch sich die erfindungsgemäße Vorrichtung auch durch eine besondere Wartungsarmut auszeichnet. Die Vorrichtung kommt also ohne eine fossile Zusatzheizung aus und kann problemlos ganzjährig auch bei niedrigen Temperaturen funktionssicher betrieben werden. Zur Verbindung des meistens außerhalb eines Gebäudes angeordneten Luft/Sole-Wärmetauschers mit dem Solarkollektor und/oder dem Anschlussspeicher kann problemlos und mit wenig Aufwand die Ausschachtung für die vertikal orientierte Registereinheit genutzt werden, in die lediglich ein isoliertes Rohr verlegt bzw. eingelegt werden muss. Im Ergebnis zeichnet sich die erfindungsgemäße Vorrichtung durch eine besondere Effektivität und Wirtschaftlichkeit aus.

Nachfolgend wird die Erfindung anhand einer lediglich ein Ausführungsbeispiel darstellenden Zeichnung detailliert erläutert. Es zeigen schematisch:
- Fig. 1: ein Schaltbild einer erfindungsgemäßen Vorrichtung in einer ersten Ausführungsform,
- Fig. 2: ein Schaltbild einer erfindungsgemäßen Vorrichtung in einer zweiten Ausführungsform und
- Fig.3: ein Schaltbild einer erfindungsgemäßen Vorrichtung in einer dritten Ausführungsform.

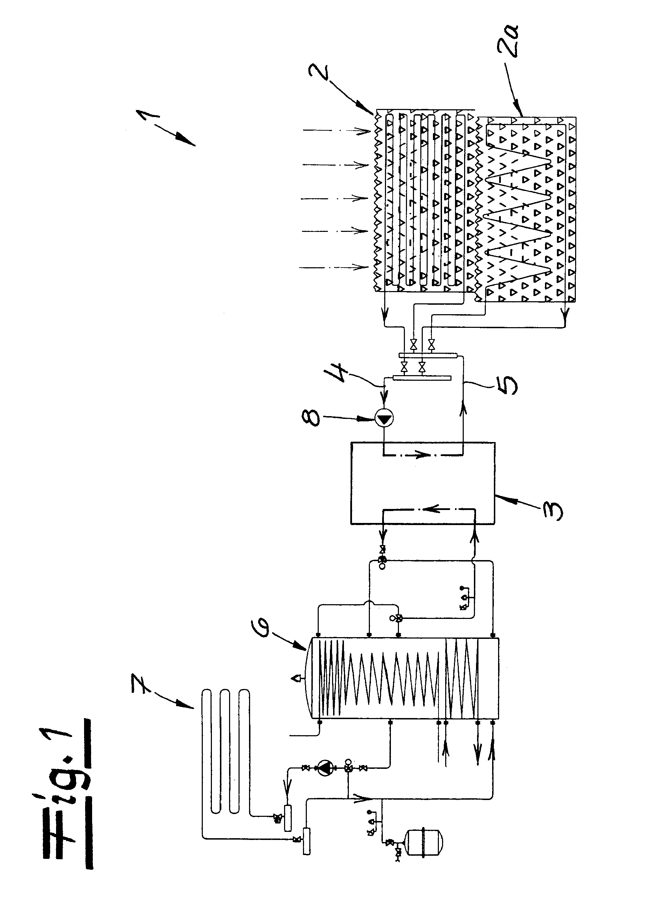

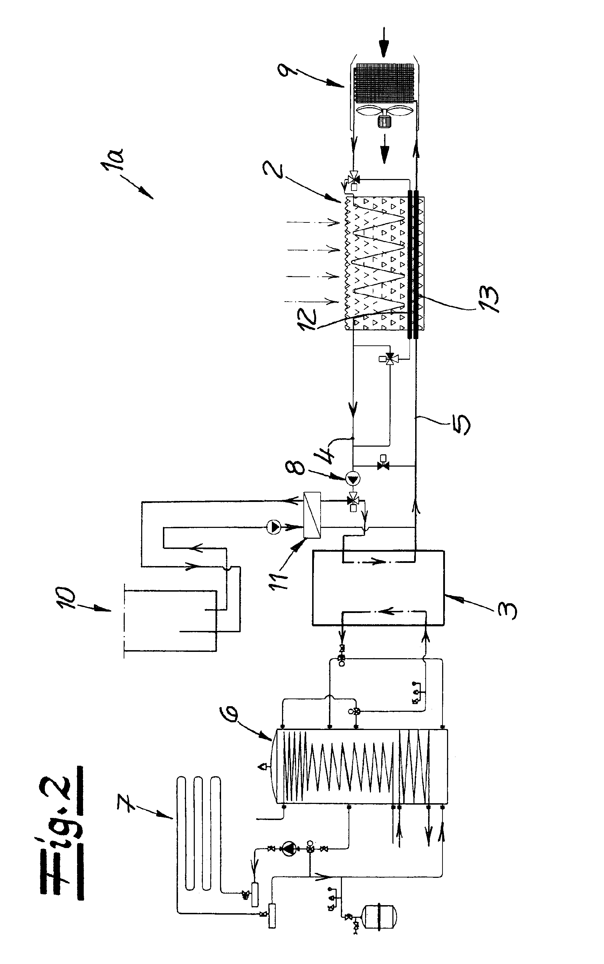

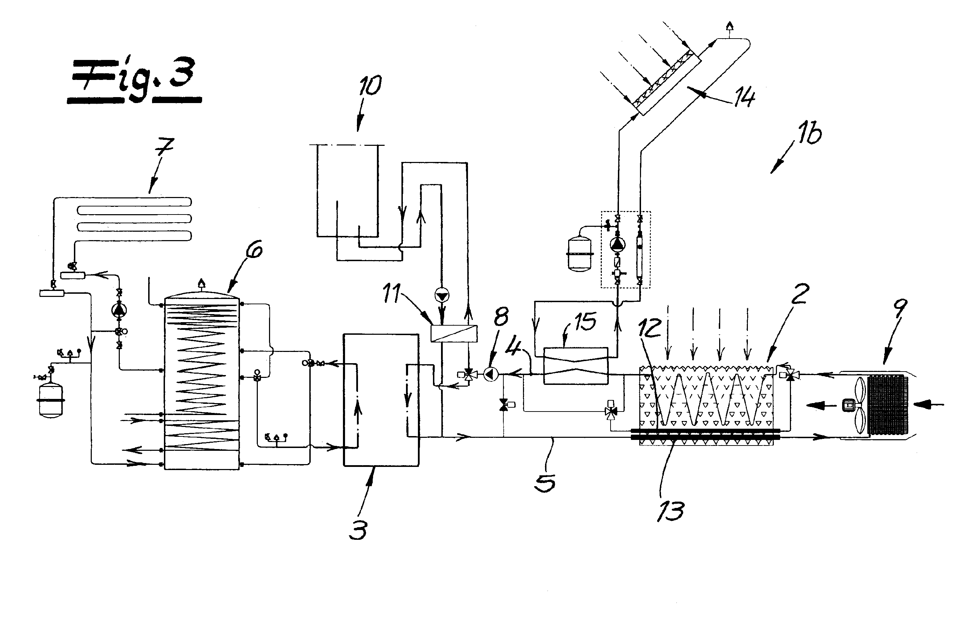

In Fig. 1 ist eine erfindungsgemäße Vorrichtung 1 dargestellt, die eine Erdwärmenutzungseinheit 2 sowie eine Wärmepumpe 3 aufweist, wobei die Erdwärmenutzungseinheit 2 über eine quellenseitige Leitung 4 mit der Wärmepumpe 3 verbunden ist. Über die Rückführleitung 5 ist die Wärmepumpe 3 ausgangsseitig mit der Erdwärmenutzungseinheit 2 verbunden. Gemäß dem Ausführungsbeispiel nach Fig. 1 ist von der Erdwärmenutzungseinheit über die quellenseitige Leitung 4, die Wärmepumpe 3 und die Rückführleitung 5 eine Sole zu der Erdwärmenutzungseinheit 2 rückführbar bzw. recyklierbar. Durch die Wärmepumpe 3 ist Wärme von der Sole auf zu erwärmendes Wasser übertragbar. Das erwärmte Wasser ist in einen Warmwasserkessel 6 pumpbar und dient beispielsweise einer nicht dargestellten Warmwasserversorgung oder zur Unterstützung eines Heizungsbetriebes, was durch das Heizungselement 7 dargestellt ist. Die vorstehenden, Fig. 1 betreffenden Ausführungen treffen ebenso auf die Fig. 2 und 3 zu, wobei übereinstimmende Merkmale in den Fig. 1, 2 und 3 mit den gleichen Bezugszeichen versehen sind.

Die Erdwärmenutzungseinheit 2 gemäß Fig. 1 weist eine nicht dargestellte Registereinheit auf, wobei die Registereinheit zwei durch Rohre gebildete Kreisläufe aufweist, die von dem Wärmeträgermedium durchströmt werden. Ebenfalls ist in Fig. 1 nicht dargestellt, dass die Registereinheit der Erdwärmenutzungseinheit 2 in einer vertikalen Ebene orientiert ist. Darüber hinaus weist die Vorrichtung 1 gemäß Fig.1 eine Erdwärmenutzungseinheit 2a auf, die eine in einer horizontalen Ebene angeordnete Registereinheit aufweist. Gemäß Fig. 1 sind die Erdwärmenutzungseinheiten 2, 2a parallel und/oder in Reihe schaltbar. Zweckmäßigerweise und gemäß Fig. 1 ist in einem von den Erdwärmenutzungseinheiten 2, 2a, der quellenseitigen Leitung 4, der Rückführleitung 5 und der Wärmepumpe 3 gebildeten Kreislaufsystem das Wärmeträgermedium mittels einer Pumpe 8 im Kreis förderbar.

Die Vorrichtung 1a gemäß Fig. 2 geht von der Vorrichtung 1 gemäß Fig. 1 aus, wobei die Vorrichtung 1a zusätzlich einen Luft/Sole-Wärmetauscher 9 und einen Anschlussspeicher 10 aufweist. Der Anschlussspeicher 10 ist zweckmäßigerweise und gemäß Fig. 2 mit einem Wärmetauscher 11 ausgestattet, wobei das Wärmeträgermedium von der quellenseitigen Leitung 4 durch den Wärmetauscher 11 zu der Rückführleitung 5 förderbar ist. Auf diese Weise ist die Wärme des Wärmeträgermediums auf ein nicht dargestelltes, in dem Anschlussspeicher 10 vorrätig gehaltenes Speichermedium übertragbar. Gemäß Fig. 2 ist es möglich, von dem Speichermedium in dem Anschlussspeicher 10 Wärme auf das Wärmeträgermedium mit dem Wärmetauscher 11 zu übertragen.

Der Luft/Sole-Wärmetauscher 9 ist mit der Maßgabe gemäß Fig. 2 in die Vorrichtung 1a integriert, dass das Wärmeträgermedium in dem Luft/Sole-Wärmetauscher 9 durch Umgebungsluft erwärmbar bzw. temperierbar ist. Weiterhin ist in Fig. 2 dargestellt, dass das durch die Luft temperierte Wärmeträgermedium von dem Wärmetauscher 9 durch eine isolierte Überbrückungsleitung 12 und die quellenseitige Leitung 4 zu dem Wärmetauscher 11 des Anschlussspeichers 10 oder der Wärmepumpe 3 förderbar ist. Weiterhin ist eine Leitung des Wärmeträgermediums von dem Wärmetauscher 9 durch die Erdwärmenutzungseinheit 2 zu der Wärmepumpe 3 und/oder dem Wärmetauscher 11 des Anschlussspeichers 10 möglich. Für den Fall, dass im Betrieb eine Vereisung des Luft/Sole-Wärmetauschers 9 zu beobachten ist, kann Wärme von dem in dem Anschlussspeicher 10 vorrätig gehaltenen Speichermedium über den Wärmetauscher 11 auf das Wärmeträgermedium übertragen werden, welches erwärmte Wärmeträgermedium dann über die Rückführleitung 5 und die isolierte Bypassleitung 13 zu dem Wärmetauscher 9 gefördert wird. Dadurch erfährt eine nicht dargestellte Wärmeaustauschfläche eine Erwärmung, wodurch ein Abtauen der einen Wärmeübergang von der Umgebungsluft auf das Wärmeträgermedium behindernden Eisschicht in dem Wärmetauscher 9 erreicht wird. Sobald die Eisschicht entfernt ist, wird ein Betriebsmodus aktiviert, in dem das Wärmeträgermedium von dem Luft/Sole-Wärmetauscher 9 und/oder die Erdwärmenutzungseinheit zu der Wärmepumpe 3 mit der Pumpe 8 gefördert wird. Schematisch ist in Fig. 2 dargestellt, dass eine die isolierte Überbrückungsleitung 12 und die isolierte Bypassleitung 13 umfassende Anschlusseinheit des Luft/Sole-Wärmetauschers 9 benachbart zu der Erdwärmenutzungseinheit 2 bzw. in dem für die Erdwärmenutzungseinheit 2 vorgesehenen Aushub bzw. Ausschachtung angeordnet ist.

Die Vorrichtung 1 b gemäß Fig. 3 geht von der Vorrichtung 1a gemäß Fig. 2 aus, wobei in der quellenseitigen Leitung 4 zusätzlich ein Solarthermiemodul 14 angeordnet ist. Dieses Solarthermiemodul 14 weist einen eigenständigen bzw. gekapselten Übertragungskreislauf auf, der über einen zusätzlichen Wärmetauscher 15 mit der quellenseitigen Leitung 4 gekoppelt ist. Auf diese Weise ist der Übertrag von in dem Solarthermiemodul 14 erzeugter Wärme auf das in der quellenseitigen Leitung 4 geführte Wärmeträgermedium möglich. Diese Wärme gemäß Fig. 3 kann über den Wärmetauscher 11 auf das Speichermedium in dem Anschlussspeicher 10 übertragen werden und/oder mit dem Wärmeträgermedium der Wärmepumpe 3 zugeführt werden. Zum Entfernen eines möglicherweise in dem Luft/Sole-Wärmetauscher 9 gebildeten Eisfilms ist das durch das Solarthermiemodul 14 erwärmte Wärmeträgermedium durch die Rückführleitung 5 sowie die isolierte Bypassleitung 13 als erwärmtes Wärmeträgermedium zu dem Luft/Sole-Wärmetauscher rückführbar.

## Patentansprüche

1. Vorrichtung zur Erwärmung von Wasser, insbesondere zur Warmwasserbereitung in einem Gebäude, wobei die Vorrichtung (1) zumindest eine Erdwärmenutzungseinheit (2, 2a) und eine Wärmepumpe (3) aufweist, wobei der Wärmepumpe (3) quellenseitig ein erwärmtes Wärmeträgermedium in einem Wärmeträgermediumkreislauf von der Erdwärmenutzungseinheit (2, 2a) zuführbar ist und nach dem Durchlauf durch die Wärmepumpe (3) zu der Erdwärmenutzungseinheit (2, 2a) als abgekühltes bzw. kaltes Wärmeträgermedium zurückführbar ist, wobei an die Erdwärmenutzungseinheit (2, 2a) ein zusätzlicher Wärmetauscher (9) zum Erwärmen des Wärmeträgermediums angeschlossen ist, wobei durch den zusätzlichen Wärmetauscher (9) erwärmtes Wärmeträgermedium der Erdwärmenutzungseinheit (2, 2a) und/oder der Wärmepumpe (3) zuführbar ist, wobei die Erdwärmenutzungseinheit (2, 2a) zumindest eine Registereinheit aufweist, wobei die Registereinheit in einer Ebene bzw. im Wesentlichen in einer Ebene angeordnet ist, wobei die Registereinheit zwei benachbart zueinander angeordnete und voneinander getrennte Erdwärmekreisläufe aufweist, wobei die Erdwärmekreisläufe vorzugsweise als parallel bzw. im Wesentlichen parallel verlaufende Rohrkreisläufe ausgebildet sind.

2. Vorrichtung nach Anspruch 1, wobei die Erdwärmenutzungseinheit (2, 2a) zumindest eine weitere Registereinheit aufweist, welche Registereinheit in einer vorzugsweise horizontalen bzw. im Wesentlichen horizontalen Ebene angeordnet ist und wobei die weitere Registereinheit zwei benachbart zueinander angeordnete und voneinander getrennte Erdwärmekreisläufe aufweist.

3. Vorrichtung nach einem der Ansprüche 1 oder 2, wobei die Erdwärmekreisläufe in einer Registereinheit als wendelförmige und/oder spiralförmige Rohrgebinde ausgebildet sind.

4. Vorrichtung nach einem der Ansprüche 1 bis 3, wobei die Erdwärmenutzungseinheit (2, 2a) in einer Tiefe von bis zu 5 m im Erdreich angeordnet ist.

5. Vorrichtung nach einem der Ansprüche 1 bis 4, wobei auf das durch den zusätzlichen Wärmetauscher (9) erwärmte Wärmeträgermedium über die Erdwärmenutzungseinheit (2, 2a) zusätzliche Wärme übertragbar ist, wenn die Temperatur des mit dem zusätzlichen Wärmetauscher (9) erwärmten Wärmeträgermediums niedriger als die Temperatur des Erdreichs ist.

6. Vorrichtung nach einem der Ansprüche 1 bis 5, wobei die Vorrichtung zumindest einen Solarkollektor aufweist, wobei mit dem Solarkollektor gewonnene Wärme auf das Wärmeträgermedium übertragbar und/oder in einem Anschlussspeicher speicherbar ist.

7. Vorrichtung nach Anspruch 6, wobei der Solarkollektor ein Wärmeübertragungsmedium in einem Solarkollektorkreislauf erwärmt, von welchem Wärmeübertragungsmedium die Wärme mit einem Wärmetauscher auf das Wärmeträgermedium übertragbar und/oder in einem Anschlussspeicher speicherbar ist.

8. Vorrichtung nach einem der Ansprüche 6 oder 7, wobei die in dem Anschlussspeicher (10) gespeicherte Wärme und/oder die mit dem Solarkollektor gewonnene Wärme auf das Wärmeträgermedium übertragbar ist und wobei das erwärmte Wärmeträgermedium dem zusätzlichen Wärmetauscher (9) zuführbar ist.

9. Vorrichtung nach einem der Ansprüche 1 bis 8, wobei die Vorrichtung eine Bypassleitung (13) aufweist, mittels welcher Bypassleitung (13) das erwärmte Wärmeträgermedium dem zusätzlichen Wärmetauscher (9) zuleitbar ist.

10. Vorrichtung nach einem der Ansprüche 1 bis 9, wobei die Bypassleitung (13) eine Isolierung aufweist und vorzugsweise zumindest teilweise und bevorzugt zumindest größtenteils in einer frostfreien Tiefe im Erdreich zu dem zusätzlichen Wärmetauscher (9) geführt ist.

11. Vorrichtung nach einem der Ansprüche 7 bis 10, wobei das durch den Solarkollektor erwärmte Wärmeträgermedium zur Temperaturerhöhung des Erdreichs bzw. zur Regeneration des Erdreichs der Erdwärmenutzungseinheit (2, 2a) zuführbar ist.

12. Vorrichtung nach einem der Ansprüche 1 bis 11, wobei der Solarkollektor in den Wärmeträgermediumkreislauf eingebunden ist und von dem Wärmeträgermedium durchströmbar ist.

13. Vorrichtung nach einem der Ansprüche 1 bis 12, wobei eine Photovoltaikeinrichtung vorgesehen ist, mit der die Wärmepumpe (3) und/oder der zusätzliche Wärmetauscher (9) mit elektrischer Energie versorgbar ist.

## Geänderte Patentansprüche

### Geänderte Patentansprüche gemäss Regel 137(2) EPÜ.

**1.** Vorrichtung zur Erwärmung von Wasser, insbesondere zur Warmwasserbereitung in einem Gebäude, wobei die Vorrichtung (1) zumindest eine Erdwärmenutzungseinheit (2, 2a) und eine Wärmepumpe (3) aufweist, wobei der Wärmepumpe (3) quellenseitig ein erwärmtes Wärmeträgermedium in einem Wärmeträgermediumkreislauf von der Erdwärmenutzungseinheit (2, 2a) zuführbar ist und nach dem Durchlauf durch die Wärmepumpe (3) zu der Erdwärmenutzungseinheit (2, 2a) als abgekühltes bzw. kaltes Wärmeträgermedium zurückführbar ist, wobei die Erdwärmenutzungseinheit (2, 2a) zumindest eine Registereinheit aufweist, wobei die Registereinheit in einer Ebene bzw. im Wesentlichen in einer Ebene angeordnet ist, wobei die Registereinheit zwei benachbart zueinander angeordnete und voneinander getrennte Erdwärmekreisläufe aufweist, wobei die Erdwärmekreisläufe vorzugsweise als parallel bzw. im Wesentlichen parallel verlaufende Rohrkreisläufe ausgebildet sind,
**dadurch gekennzeichnet,**
**dass** an die Erdwärmenutzungseinheit (2, 2a) ein zusätzlicher Wärmetauscher (9) zum Erwärmen des Wärmeträgermediums angeschlossen ist, wobei durch den zusätzlichen Wärmetauscher (9) erwärmtes Wärmeträgermedium der Erdwärmenutzungseinheit (2, 2a) und/oder der Wärmepumpe (3) zuführbar ist, dass die in dem Wärmeträgermedium gespeicherte Wärme in einem Anschlussspeicher (10) speicherbar ist, dass die in dem Anschlussspeicher (10) gespeicherte Wärme auf das Wärmeträgermedium übertragbar ist und dass das erwärmte Wärmeträgermedium dem zusätzlichen Wärmetauscher (9) zuführbar ist.

**2.** Vorrichtung nach Anspruch 1, wobei die Erdwärmenutzungseinheit (2, 2a) zumindest eine weitere Registereinheit aufweist, welche Registereinheit in einer vorzugsweise horizontalen bzw. im Wesentlichen horizontalen Ebene angeordnet ist und wobei die weitere Registereinheit zwei benachbart zueinander angeordnete und voneinander getrennte Erdwärmekreisläufe aufweist.

**3.** Vorrichtung nach einem der Ansprüche 1 oder 2, wobei die Erdwärmekreisläufe in einer Registereinheit als wendelförmige und/oder spiralförmige Rohrgebinde ausgebildet sind.

**4.** Vorrichtung nach einem der Ansprüche 1 bis 3, wobei die Erdwärmenutzungseinheit (2, 2a) in einer Tiefe von bis zu 5 m im Erdreich angeordnet ist.

**5.** Vorrichtung nach einem der Ansprüche 1 bis 4, wobei auf das durch den zusätzlichen Wärmetauscher (9) erwärmte Wärmeträgermedium über die Erdwärmenutzungseinheit (2, 2a) zusätzliche Wärme übertragbar ist, wenn die Temperatur des mit dem zusätzlichen Wärmetauscher (9) erwärmten Wärmeträgermediums niedriger als die Temperatur des Erdreichs ist.

**6.** Vorrichtung nach einem der Ansprüche 1 bis 5, wobei die Vorrichtung zumindest einen Solarkollektor aufweist, wobei mit dem Solarkollektor gewonnene Wärme auf das Wärmeträgermedium übertragbar und/oder in einem Anschlussspeicher speicherbar ist.

**7.** Vorrichtung nach Anspruch 6, wobei der Solarkollektor ein Wärmeübertragungsmedium in einem Solarkollektorkreislauf erwärmt, von welchem Wärmeübertragungsmedium die Wärme mit einem Wärmetauscher auf das Wärmeträgermedium übertragbar und/oder in einem Anschlussspeicher speicherbar ist.

**8.** Vorrichtung nach einem der Ansprüche 6 oder 7, wobei die mit dem Solarkollektor gewonnene Wärme auf das Wärmeträgermedium übertragbar ist und wobei das erwärmte Wärmeträgermedium dem zusätzlichen Wärmetauscher (9) zuführbar ist.

**9.** Vorrichtung nach einem der Ansprüche 1 bis 8, wobei die Vorrichtung eine Bypassleitung (13) aufweist, mittels welcher Bypassleitung (13) das erwärmte Wärmeträgermedium dem zusätzlichen Wärmetauscher (9) zuleitbar ist.

**10.** Vorrichtung nach einem der Ansprüche 1 bis 9, wobei die Bypassleitung (13) eine Isolierung aufweist und vorzugsweise zumindest teilweise und bevorzugt zumindest größtenteils in einer frostfreien Tiefe im Erdreich zu dem zusätzlichen Wärmetauscher (9) geführt ist.

**11.** Vorrichtung nach einem der Ansprüche 7 bis 10, wobei das durch den Solarkollektor erwärmte Wärmeträgermedium zur Temperaturerhöhung des Erdreichs bzw. zur Regeneration des Erdreichs der Erdwärmenutzungseinheit (2, 2a) zuführbar ist.

**12.** Vorrichtung nach einem der Ansprüche 1 bis 11, wobei der Solarkollektor in den Wärmeträgermediumkreislauf eingebunden ist und von dem Wärmeträgermedium durchströmbar ist.

**13.** Vorrichtung nach einem der Ansprüche 1 bis 12, wobei eine Photovoltaikeinrichtung vorgesehen ist, mit der die Wärmepumpe (3) und/oder der zusätzliche Wärmetauscher (9) mit elektrischer Energie versorgbar ist.
